# EUROPÄISCHE PATENTSCHRIFT

(11) **EP 2 679 451 B1**
(45) Veröffentlichungstag und Bekanntmachung des Hinweises auf die Patenterteilung: **10.12.2014**
(21) Anmeldenummer: 12189303.6
(22) Anmeldetag: 19.10.2012
(51) Int. Cl.: B60R 21/38

(54) **Antriebseinheit mit Gasgenerator**
Actuator comprising a gas generator
Unité d'entraînement comportant un générateur de gaz

(43) Veröffentlichungstag der Anmeldung: 01.01.2014
(73) Patentinhaber: Metalsa Automotive GmbH, 51702 Bergneustadt (DE)
(72) Erfinder: Kern, Alexander, 51597 Morsbach (DE)
(74) Vertreter: Kalkoff & Partner

(56) Entgegenhaltungen:
- EP-A1- 1 424 247
- EP-B1- 1 532 370
- DE-A1-102005 014 567
- US-A1- 2005 257 980
- US-B2- 7 159 685

## Beschreibung

Die Erfindung betrifft eine Antriebseinheit zur Verstellung eines verlagerbaren Bauteils eines Kraftfahrzeugsicherheitssystems, mit
- einem zwischen einer Normalposition und einer Aktivierungsposition verstellbaren und mit dem verlagerbaren Bauteil in Eingriff bringbaren Antriebselement und
- einem mit dem Antriebselement in Wirkverbindung stehenden Gasgenerator zur Verlagerung des Antriebselements aus der Normalposition in die Aktivierungsposition, wobei das mit einem verlagerbaren Bauteil eines Kraftfahrzeugsicherheitssystems in Eingriff bringbare Antriebselement einen balgförmigen Expansionsbereich aufweist, der durch Aktivierung eines Gasgenerators aus einer in der Normalposition zusammengefalteten Lage in eine in der Aktivierungsposition entfaltete Lage verstellbar ist..

Kraftfahrzeugsicherheitssysteme werden bei modernen Kraftfahrzeugen in vielfältigen Ausgestaltungen eingesetzt, um die auf die Fahrzeuginsassen bei einem Unfall wirkenden Belastungen zu reduzieren, um so Verletzungen zu verhindern oder zumindest deren Schwere zu minimieren. Bspw. dienen bei Cabriofahrzeugen mittels einer Antriebseinheit aus einer Normalposition in eine Überschlagsposition verstellbarer Überrollkörper dazu, die Fahrzeuginsassen im Falle eines Überschlags vor Schäden im Kopfbereich zu schützen.

Neben dem Schutz von Fahrzeuginsassen werden Kraftfahrzeugsicherheitssysteme mittlerweile auch zum passiven Unfallschutz eingesetzt, um so auch die Verletzungen der am unfallbeteiligten Unfallgegner zu reduzieren. So werden bspw, aufstellbare Motorhauben, welche ebenfalls mittels einer Antriebseinheit verstellbar sind, dazu verwendet, um im Falle eines Unfallhergangs mit einer auf die Motorhaube aufschlagenden Person eine höhere Deformationszone bereitzustellen, um die Schwere der Verletzungen zu reduzieren. Antriebseinheiten der eingangs genannten Art dienen dabei dazu, sensorgesteuert eine zuverlässige Verlagerung der verlagerbaren Bauteile des Kraftfahrzeugsicherheitssystems zu gewährleisten, damit die verlagerten Bauteile die gewünschte Schutzfunktion erfüllen könncn.

Den Anforderungen an eine schnelle Aufstellung folgend werden in den Antriebseinheiten vermehrt Gasgeneratoren eingesetzt, wobei diese durch die schlagartige Bereitstellung eines erhöhten Drucks eine unmittelbare Verlagerung der zugeordneten Bauteile bewirken können. Üblicherweise werden bei bekannten Antriebseinheiten Kolbeneingesetzt, welche sich mit den verlagerbaren Bauteilen in Wirkverbindung befinden. Aufgrund einer Druckerhöhung in Folge der Aktivierung des Gasgenerators erfolgt durch eine Verlagerung des Kolbens aus einer Aufnahme heraus eine Verlagerung der zugeordneten Bauteile. Derartige Kolbensysteme weisen jedoch den Nachteil auf, dass sie eine zuverlässige Abdichtung aufweisen müssen, um Verstellung verhindernde Leckagen wirksam zu vermeiden. Hieraus resultieren erhöhte Fertigungskosten für die Antriebseinheiten, die folglich auch zu hohen Kosten des mit der Antriebseinheit versehenen Kraftfahrzeugssicherheitssystems führen. Zudem hat die Verwendung eines Kolbensystems einen hohen Bauraum zur Folge.

Bei dem Antriebselement der Antriebseinhcit handelt es sich um ein Bauteil der Antriebseinheit, welches zwischen der Normalposition und der Aktivierungsposition verstellbar ist. Das Antriebselement ist dabei derart mit einem verlagerbaren Bauteil eines Kraftfahrzeugsicherheitssystems in Eingriff bringbar, dass eine Verlagerung des Antriebselements aufgrund der Eingriffsstellung mit dem verlagerbaren Bauteil im Falle der Aktivierung der Antriebseinheit dessen Verstellung bewirkt. So kann bspw. ein Überrollkörper durch das Antriebselement aus seiner Ruhelage in eine Überschlagsposition verstellt werden, wobei die hierfür nötige Energie durch das Antriebselement bei dessen Verstellung aus der Normalposition in die Aktivierungsposition bereitgestellt wird.

Wie beispielsweise in der EP 1 424 247 A1 weist dabei das Antriebselement einen balgförmigen Expansionsbereich auf, der sich in der Normalposition in einem zusammengefalteten Zustand befindet. Durch eine Aktivierung des Gasgenerators und einer damit einhergehenden Druckerhöhung innerhalb des balgförmigen Expansionsbereichs wird dieser aus dem zusammengefalteten Zustand in eine entfaltete Lage verstellt, wobei die stattfindende Ausdehnung zur Verlagerung des Bauteils des Kraftfahrzeugsicherheitssystems genutzt werden kann.

Die Verwendung eines balgförmigen Expansionsbereichs zeichnet sich dabei dadurch aus, dass hierdurch die Antriebseinheit im nicht aktivierten Zustand in Wirkrichtung des Antriebselements eine nur sehr geringe Bauhöhe aufweist. Insbesondere im Vergleich zu aus dem Stand der Technik bekannten Antriebseinheiten besteht ein erheblicher Größenvorteil, da auf Kolben mit entsprechenden Längserstreckungen verzichtet werden kann. Neben dem darüber hinaus geringen Gewicht des Antriebselements zeichnet sich der balgförmige Expansionsbereich ferner dadurch aus, dass es aufgrund der balgförmigen Struktur im Falle einer direkten Anlage an das verlagerbare Bauteil zu einer selbsttätigen Abdichtung kommt, da der Expansionsbereich im Kontaktbereich mit dem zu verlagernden Bauteil aufgrund der Druckerhöhung direkt an das Bauteil abdichtend angepresst wird. Insgesamt zeichnet sich somit die erfindungsgemäße Antriebseinhcit durch ihr geringes Gewicht und niedriger Bauhöhe sowie hohe Zuverlässigkeit aus.

Wesentlich für die Funktion der erfindungsgemäßen Antriebseinheit ist, dass der balgförmige Expansionsbereich derart mit dem Gasgenerator in Wirkverbindung befindlich ist, dass eine Aktivierung des Gasgenerators eine Verstellung des balgförmigen Expansionsbereichs aus dessen Normalposition in eine Aktivierungsposition bewirkt. Hierzu ist es erforderlich, dass das Innere des Expansionsbereichs durch den Gasgenerator derart mit Druck beaufschlagbar ist, dass es zu einem Entfalten des Expansionsbereichs kommt, wenn der Druck im Expansionsbereich ansteigt.

Der Erfindung liegt die Aufgabe zugrunde, eine Antriebseinheit für ein Kraftfahrzeugsicherheitssystem bereitzustellen, welches eine zuverlässige Verlagerung eines Bauteils gewährleistet und dabei kostengünstig hergestellt werden kann.

Die Erfindung löst die Aufgabe durch eine Antriebseinheit mit den Merkmalen des Anspruchs 1. Vorteilhafte Weiterbildungen werden in den abhängigen Ansprüchen angegeben.

Kennzeichnend für die erfindungsgemäße Antriebseinheit ist, dass der balgförmige Expansionsbereich an dem dem verlagerbaren Bauteil zugewandten Ende mit einem offenen ende ausgebildet ist. Als vorteilhaft zeichnet sich dabei aus, dass es aufgrund der balgförmigen Ausgestaltung des Expansionsbereichs während der Verlagerung zu einer selbsttätigen Abdichtung zwischen dem Antriebselement und dem zu verlagernden Bauteil in deren Kontaktbereich kommt. Erfindungsgemäß liegt der Expansionsbereich vorteilhafter Weise unmittelbar an dem verlagerbaren Bauteil an, so dass in ergänzender Weise die Herstellungskosten für die Antriebseinheit reduziert werden können.

Nach einer vorteilhaften Weiterbildung der Erfindung ist dabei vorgesehen, dass der Gasgenerator zumindest abschnittsweise im Inneren des Expansionsbcreichs angeordnet ist. Diese Ausgestaltung der Erfindung zeichnet sich dabei dadurch aus, dass eine Aktivierung des Gasgenerators unmittelbar zu einer Druckerhöhung im Inneren des Expansionsbereichs führt, in deren Folge dieser in die entfaltete Lage verstellt wird. Die Anordnung im Inneren des Expansionsbereichs erlaubt es darüber hinaus, die Antriebseinheit in ergänzenderweise in ihrem erforderlichen Bauraum zu reduzieren. Besonders vorteilhafter Weise ist hierzu der Gasgenerator vollständig im Inneren des Expansionsbereichs angeordnet, was eine besonders kompakte Bauform der Antriebseinheit ermöglicht.

Für die Funktion der verstellbaren Antriebseinheit ist es grundsätzlich erforderlich, dass diese einen balgförmigen, zwischen einer zusammengefalteten und einer entfalteten Lage verstellbaren Expansionsbereich aufweist, welcher zur Verlagerung des Antriebselements dient. Gemäß einer vorteilhaften Weiterbildung der Erfindung kann dabei das Antriebselement auch vollständig durch den balgförmigen Expansionsbereich gebildet werden. Auf zusätzliche, sich möglicherweise an den Expansionsbereich anschließenden Kopplungselemente, welche bspw. zur Verbindung mit dem zu verlagernden Bauteil verwendet werden können, kann dabei verzichtet werden.

Die Ausgestaltung des balgförmigen Expansionsbereichs ist dabei grundsätzlich frei wählbar. Wesentlich ist, dass eine Druckerhöhung im Expansionsbereich dessen Ausdehnung bewirkt, in deren Folge ein an dem Expansionsbereichs anliegendes Bauteil in vorgegebener Weise verstellt wird. Nach einer besonders vorteilhaften Ausgestaltung der Erfindung ist jedoch vorgesehen, dass der balgförmige Expansionsbereich durch einen in axialer Richtung längbaren Wellbalg oder Membranbalg gebildet ist. Die Verwendung eines Well- oder Membranbalgs zeichnet sich dabei dadurch aus, dass dieser bei gleichzeitig geringer Bauhöhe in der Normalposition, in der Aktivierungsposition ein Vielfaches seiner Höhe der Normalposition aufweist. Darüber hinaus gewährleistet die Verwendung eines Well- oder Membranbalgs eine besonders gute Abdichtung gegenüber einem anliegenden Bauteil, wobei gleichzeitig eine schnelle Verlagerung innerhalb kürzester Zeit erfolgen kann.

Eine Erhöhung des Innendrucks innerhalb des Wellbalgs oder Membranbalgs durch eine Aktivierung des Gasgenerators führt zu einer axialen Längung des Well- oder Membranbalgs, welche in zuverlässiger Weise zur Verlagerung entsprechender Bauteile genutztwerden kann. Zudem erlaubt die Wellenstruktur trotz hoher Innendrücke die Verwendung nur sehr geringer Wanddicken. Besonders vorteilhafter Weise ist dabei vorgesehen, dass der balgförmige Expansionsbereich aus einer Metallmembran gebildet ist. Diese Ausgestaltung der Erfindung ermöglicht die Herstellung besonders dünnwandiger Expansionsbereiche und verhindert darüber hinaus eine einfache Rückverlagerung des Expansionsbereichs aus der Aktivierungsposition in die Normalposition, nachdem ein aus einer Metallmembran gebildeter balgförmiger Expansionsbereich nur unter erhöhtem Kraftaufwand in Richtung der Normalposition rückverlagerbar ist. Nach einer besonders vorteilhaften Ausgestaltung der Erfindung kann zudem vorgesehen werden, dass bei einer möglichen Rückverlagerung ein Energieabbau stattfindet.

Nach einer weiteren Ausgestaltung der Erfindung weist die Antriebseinheit eine in der Aktivierungsposition einer Rückverlagerung des Antriebselements in die Normalposition entgegenwirkende Dämpfungseinheit auf. Eine separate Dämpfungseinheit dient dabei dazu, im Falle einer vorgesehenen Rückverlagerung des Bauteils des Kraftfahrzeugsicherheitssystems einen Energieabbau zu gewährleisten, um so die im Crashfall auf die Insassen und unfallbeteiligten Personen wirkenden Kräfte zu reduzieren. Die Dämpfungseinheit wird dabei erst nach Erreichen der Aktivierungsposition des Antriebselements aktiviert und wirkt dann der Rückverlagerung des Antriebselements in Richtung auf die Normalposition entgegen. Eine derart weitergebildete Antriebseinheit zeichnet sich somit dadurch aus, dass sie zusätzlich zur Aktivierung eines Kraftfahrzeugsicherheitssystems die Möglichkeit bietet, über das verlagerbare Bauteil im Zusammenwirken mit dem Antriebselement durch die Dämpfungseinheit Energie abzubauen.

Die Ausgestaltung der Dämpfungseinheit ist dabei grundsätzlich frei wählbar. Nach einer besonders vorteilhaften Ausgestaltung der Erfindung ist jedoch vorgesehen, dass die Dämpfungseinheit zwei in der Normalposition des Antriebselements in einer Außereingriffsposition befindliche Dämpfungskörper aufweist, die derart angeordnet sind, dass sie in der Aktivierungsposition des Antriebselements in Wirkverbindung gelangen. Gemäß dieser Ausgestaltung der Erfindung ist vorgesehen, dass die Dämpfungseinheit zumindest zweiteilig ausgebildet ist, wobei die zumindest zwei Dämpfungskörper derart angeordnet sind, dass sie in der Normalposition in einer Außereingriffsstellung sind und erst nach Erreichen der Aktivierungsposition durch das Antriebselement in Wirkverbindung gelangen, in der sie dann einer Rückverlagerung entgegen wirken. Durch diese Ausgestaltung der Dämpfungseinheit wird gewährleistet, dass die Verlagerung des Antriebselements in die Aktivierungsposition ohne Beeinträchtigung der Dämpfungseinheit erfolgen kann. Die Dämpfungseinheit gelangt erst in der Aktivierungsposition in eine Lage, in der sie eine Rückverlagerung in die Normalposition dämpft. Darüber hinaus bietet eine mehrteilige, mindestens zweiteilige Ausgestaltung der Dämpfungseinheit die Möglichkeit, die Antriebseinheit auch mit der Dämpfungseinheit kompakt auszubilden.

Wie bereits eingangs dargestellt, reicht es zur Funktion der Antriebseinheit aus, dass das Antriebselement mit einem zu verlagerbaren Bauteil in Eingriff bringbar ist, wobei bereits eine Anlage des Antriebselements an dem verlagerbaren Bauteil, insbesondere aufgrund der selbsttätigen Abdichtung auch im Falle eines in Richtung auf das verlagerbare Bauteil offenen Expansionsbereichs ausreichend ist. Nach einer weiteren Ausgestaltung der Erfindung weist die Antriebseinheit jedoch ein mit dem verlagerbaren Bauteil verbindbares Anschlusselement auf.

Gemäß dieser Ausgestaltung der Erfindung ist die Antriebseinheit über das Anschlusselement mit dem verlagerbaren Bauteil des Kraftfahrzeugsicherheitssystems verbindbar. Die Verwendung eines Anschlusselements bietet die Möglichkeit einer exakten Positionierung der Antriebseinheit gegenüber dem verlagerbaren Bauteil. Gleichzeitig ist dabei das Anschlusselement derart an der Antriebseinheit angeordnet, dass es eine Verlagerung des Antriebselements aus der Normalposition in die Aktivierungsposition im Falle einer Aktivierung des Gasgenerators zuverlässig ermöglicht.

Besonders vorteilhafter Weise ist dabei vorgesehen, dass das Anschlusselement in der Normalposition des Antriebselements derart an einem Grundträger lagegesichert ist, dass eine Aktivierung des Gasgenerators eine Freigabe des Anschlusselements gegenüber dem Grundträger bewirkt. Durch diese Ausgestaltung der Erfindung, wobei das Anschlusselement in der Normalposition des Antriebselements an dem Grundträger lagegesichert ist, wird in besonders vorteilhafter Weise sichergestellt, dass das verlagerbare Bauteil gegenüber dem Grundträger der Antriebseinheit, an dem auch das Antriebselement angeordnet ist, in seiner Position lagegesichert ist. Eine Aktivierung des Gasgenerators dient neben der Verstellung des Antriebselements in die Aktivierungsposition gemäß dieser Ausgestaltung der Erfindung ferner dazu, eine Freigabe des Anschlusselements gegenüber dem Grundträger herbeizufiihren, so dass gleichzeitig mit der Aktivierung des Gasgenerators eine freie Verlagerung des Antriebselements aus der Normalposition in die Aktivierungsposition erfolgen kann. Aufgrund der Ausgestaltung derart, dass eine Aktivierung des Gasgenerators neben der Verlagerung des Antriebselements in die Aktivierungsposition ferner eine Freigabe des Anschlusselements gegenüber dem Grundträger bewirkt, kann auf zusätzliche Entriegelungselemente verzichtet werden, wodurch eine besonders hohe Funktionssicherheit der Antriebseinheit gewährleistet werden kann.

Die Ausgestaltung des Anschlusselements ebenso wie dessen Lagesicherung im Falle der gemäß einer vorteilhaften Weiterbildung vorgesehenen Lagesicherung in der Normalposition des Antriebselements kann grundsätzlich in beliebiger Weise erfolgen. Nach einer besonders vorteilhaften Weiterbildung der Erfindung ist jedoch vorgesehen, dass eine Aktivierung des Gasgenerators eine Verschiebung eines das Anschlusselement an dem Grundträger festlegenden Sperrelements aus einer Sperrlage in eine das Anschlusselement gegenüber dem Grundträger freigebende Freigabelage bewirkt. Das Sperrelement wirkt somit in der Normalposition des Antriebselements mit dem Grundträger und dem Anschlusselement derart zusammen, dass das Sperrelement das Anschlusselement in der Normalposition des Antriebselements an dem Grundträger fixiert. Durch eine Aktivierung des Gasgenerators zur Verstellung des Antriebselements wird jedoch eine Verschiebung des Sperrelements hervorgerufen, durch die das Anschlusselement gegenüber dem Grundträger freigegeben wird, so dass eine ungehinderte Verlagerung des Antriebselements in die Aktivierungsposition erfolgen kann. Die Verwendung eines verschiebbaren Sperrelements, welches zwischen seiner Sperrlage und seiner Freigabelage verstellbar ist, gewährleistet dabei eine hohe Funktionssicherheit der Antriebseinheit.

Nach einer besonders vorteilhaften Ausgestaltung der Erfindung ist dabei ferner vorgesehen, dass das Sperrelement in Richtung auf die Sperrlage vorgespannt ist. Durch diese Ausgestaltung der Erfindung wird einer versehentlichen Freigabe des Anschlusselements und einer damit möglicherweise einhergehenden Trennung des Bauteils von der Antriebseinheit in wirksamer Weise vorgebeugt. Zudem werden durch die Vorspannung unerwünschten Klappergeräusche, welche zu einer Belastung der Fahrzeuginsassen insbesondere in dem Fall führen können, wenn die Antriebseinheit angrenzend an dem Fahrzeuginnenraum angeordnet ist, wirksam vermieden.

Die Anordnung des Antriebselements welches nach einer besonders vorteilhaften Ausgestaltung der Erfindung durch den balgförmigen Expansionsbereich gebildet ist, sowie des Gasgenerators an einer mit einem Grundträger versehenen Antriebseinheit kann grundsätzlich in beliebiger Weise erfolgen. So ist es bspw. möglich, sowohl das Antriebselement wie auch den Gasgenerator separat an dem Grundträger in ihrer relativen Position zueinander zu sichern. Nach einer besonders vorteilhaften Ausgestaltung der Erfindung ist jedoch vorgesehen, dass das Antriebselement und der Gasgenerator an einem in den Grundträger einsteckbaren Haltekörper angeordnet sind.

Gemäß dieser Ausgestaltung der Erfindung ist vorgesehen, dass das Antriebselement und der Gasgenerator mit dem Haltekörper eine Baueinheit bilden, welche über den Haltekörper an einer vorgesehenen Position an dem Grundträger angeordnet werden kann. Diese Ausgestaltung der Erfindung ermöglicht es, das Antriebselement und den Gasgenerator unabhängig von dem Grundträger in ihrer Position relativ zueinander zu sichern, wodurch die Funktionssicherheit in ergänzender Weise gesteigert wird. Eine Lagesicherung des Gasgenerators und des Antriebselements gegenüber dem Grundträger wird dabei in besonders zuverlässiger Weise durch den einsteckbaren Haltekörper gewährleistet, über den das Antriebselement auch zuverlässig an dem Grundträger abgestützt ist.

Besonders vorteilhafter Weise ist nach einer Weiterbildung der Erfindung vorgesehen, dass der Haltekörper in der Normalposition durch einen Gleitkeil gegenüber dem Grundträger beabstandet ist, wobei eine Aktivierung des Gasgenerators eine Verschiebung des mit dem Sperrelement verbundenen Gleitkeils in die Freigabelage des Sperrelements bewirkt. Gemäß dieser Ausgestaltung der Erfindung ist der Haltekörper in der Normalposition des Antriebselements über einen Gleitkeil gegenüber dem Grundträger beabstandet. D. h., zwischen dem Grundträger und dem Haltekörper ist der Gleitkeil quer zur Verstellrichtung des Antriebselements verschiebbar angeordnet. Durch eine Aktivierung des Gasgenerators wird neben einer Verlagerung des Antriebselements aus der Normalposition in die Aktivierungsposition zuvor aufgrund der über den Haltekörper bestehenden Abstützung des Antriebselements an dem Grundträger über den Haltekörper Druck auf den zwischen den Grundträger und dem Haltekörper angeordneten Gleitkeil ausgeübt. Der Gleitkeil wird dabei aufgrund seiner Anschlussschräge gegenüber dem Haltekörper linear verschoben, weshalb aufgrund der Verbindung des Gleitkeils mit dem Sperrelement auch das Sperrelement verlagert wird. Die Verlagerung ist dabei dergestalt, dass das Sperrelement aus seiner Sperrlage in die Freigabelage bewegt wird.

Durch diese Ausgestaltung der Erfindung wird somit in besonders einfacher und zuverlässiger Weise gewährleistet, dass es im Falle einer Aktivierung des Gasgenerators neben einer Verlagerung des Antriebselements zuvor automatisch zu einer Freigabe des Anschlusselements durch eine Verschiebung des Sperrelements kommt. Nach einer Verlagerung des Gleikeils besteht eine ausreichende Abstützung des Haltekörpers an dem Grundkörper so dass eine zuverlässige Verlagerung des mit dem Antriebselement verbundenen Bauteils sichergestellt ist.

Grundsätzlich kann die Verstellbewegung des mit der Antriebseinheit in Wirkverbindung befindlichen, verlagerbaren Bauteils durch beliebige Begrenzungsmittel am Kraftfahrzeugsicherheitssystem festgelegt werden. Nach einer besonders vorteilhaften Ausgestaltung der Erfindung ist jedoch vorgesehen, dass das Anschlusselement mit einem gegenüber dem Grundträger bis in eine Anschlagposition verstellbaren Begrenzungselement verbunden ist. Gemäß dieser Ausgestaltung der Erfindung ist das mit dem verlagerbaren Bauteil verbindbare Anschlusselement mit einem Begrenzungselement verbunden, welches die Verlagerung des Anschlusselements gegenüber dem Grundträger begrenzt. So wird der Bewegungsbereich des Anschlusselements in Wirkrichtung des Antriebselements durch die Anschlagposition des Begrenzungselements festgelegt, wobei in der Anschlagposition das Begrenzungselement abschnittsweise an dem Grundträger anliegt. Durch diese Ausgestaltung der Erfindung kann auf separate, zur Begrenzung der Verstellbewegung des verlagerbaren Bauteils der Kraftfahrzeugsicherheitssysteme vorgesehenen Einrichtungen verzichtet werden.

Die Ausgestaltung des Gasgenerators ist grundsätzlich frei wählbar. Nach einer besonders vorteilhaften Ausgestaltung der Erfindung ist jedoch vorgesehen, dass der Gasgenerator durch einen Mikrogasgenerator, insbesondere durch einen pyrotechnischen Mikrogasgenerator gebildet ist. Die Verwendung insbesondere eines pyrotechnischen Mikrogasgenerators gewährleistet in zuverlässiger Weise eine für die Verlagerung des Antriebselements ausreichende Druckerhöhung im Expansionsbereich. Diese ist darüber hinaus ferner auch ausreichend, um im Falle der vorteilhafter Weise vorgesehenen Verwendung eines Sperrelements ggf. auch dessen Verlagerung in die Freigabelage sicherzustellen.

Ein Ausführungsbeispiel der Erfindung wird nachstehend anhand der Figuren näher erläutert. In den Figuren zeigen
- Fig. 1: eine perspektivische Ansicht einer Antriebseinheit in einer Normalposition des Antriebselements;
- Fig. 2: eine perspektivische Ansicht der Antriebseinheit von Figur 1 in einer Aktivierungsposition des Antriebselements;
- Fig. 3: in einer Schnittdarstellung eine Seitenansicht der Antriebseinheit von Figur 1 in der Normalposition des Antriebselements und
- Fig. 4: in einer Schnittdarstellung eine Seitenansicht der Antriebseinheit von Figur 1 in einer Aktivierungsposition des Antriebselements.

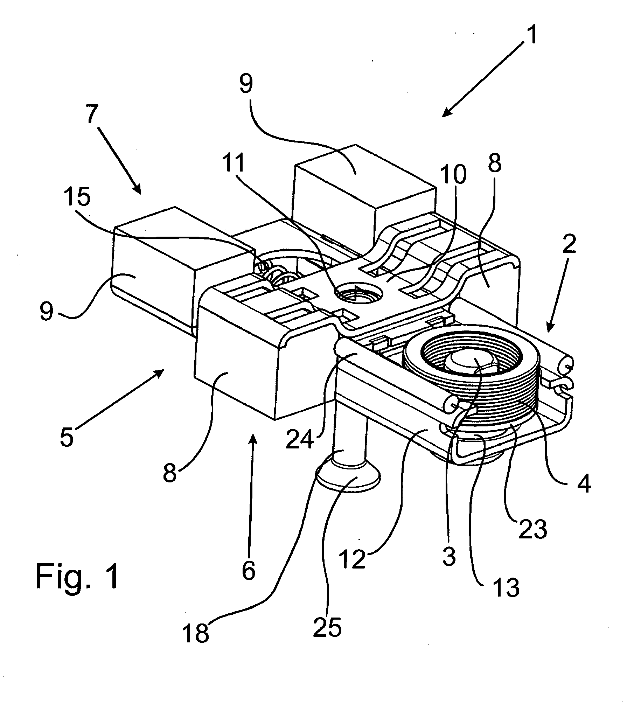

Figur 1 zeigt in einer perspektivischen Darstellung eine Antriebseinheit 1 zur Verlagerung eines Bauteils 19 eines hier nicht dargestellten Kraftfahrzeugsicherheitssystems .

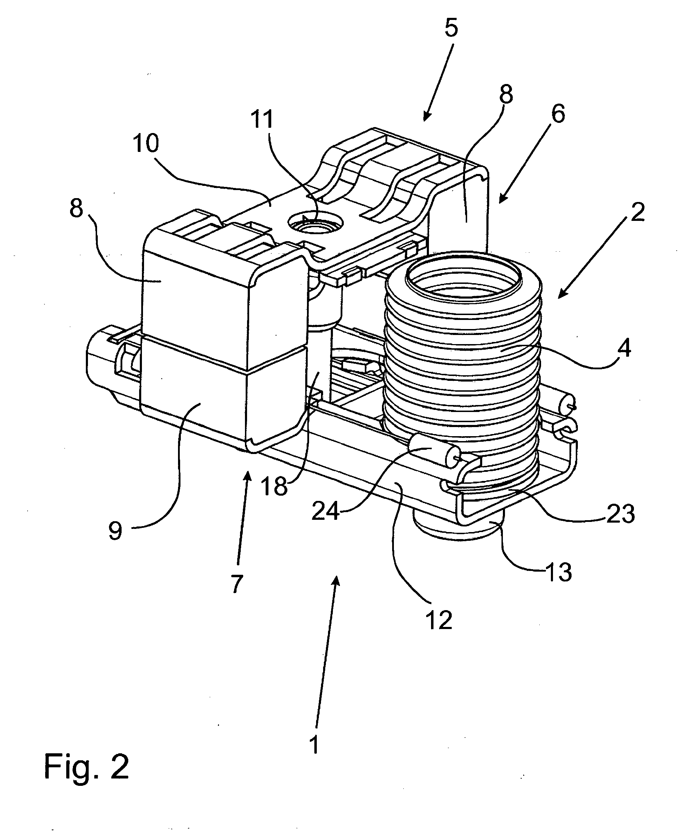

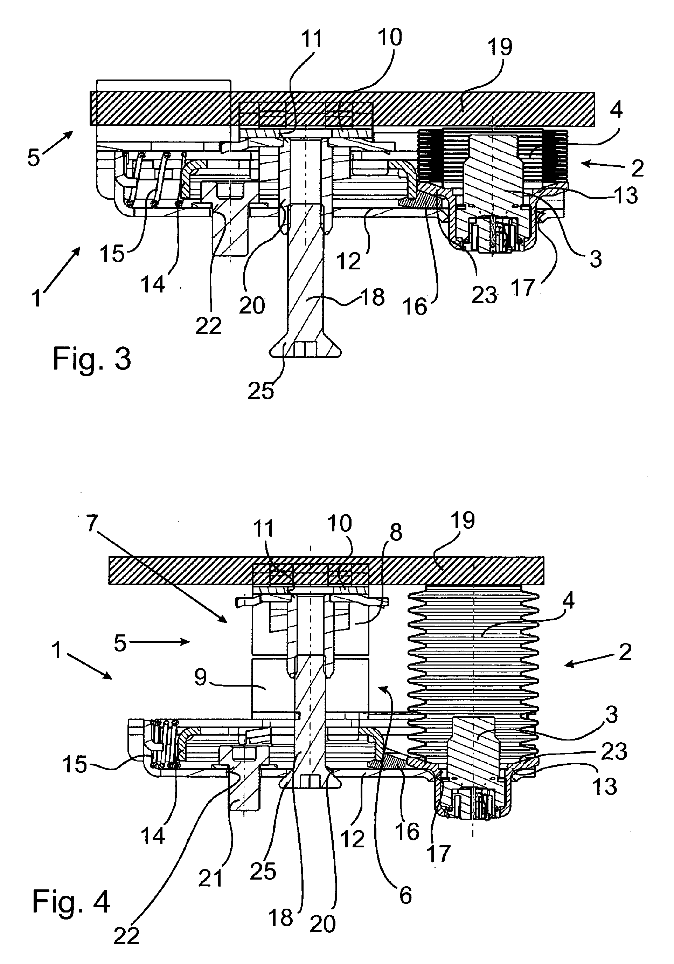

Als zentrales Element zur Verlagerung des verlagerbaren Bauteils 19 des Kraftfahrzeugsicherheitssystems weist die Antriebseinheit 1 ein durch einen Expansionsbereich gebildetes Antriebselement auf, wobei der Expansionsbereich wiederum durch einen Wellbalg 4 gebildet ist. Zur Verlagerung des verlagerbaren Bauteils 19 ist der Wellbalg 4 dabei aus seiner in Fig. 1 und Fig. 3 dargestellten Normalposition in seine in Fig. 2 und 4 dargestellte Aktivierungsposition verstellbar. In der Normalposition befindet sich der Wellbalg 4 in einem zusammengefalteten Zustand. Um eine Aufstellung des Wellbalgs 4 zu bewirken ist im Inneren des Wellbalgs 4 ein Mikrogasgenerator 3 angeordnet. Eine Aktivierung des Mikrogasgenerators 3 bewirkt eine schlagartige Druckerhöhung, welche dann zu einer Entfaltung des Wellbalgs in dessen Längsachsenrichtung bis in die in Fig. 2 und Fig. 4 dargestellte Aktivierungsposition bewirkt. Die axiale Längung des Wellbalgs 4 bewirkt dabei aufgrund einer Wirkverbindung eines einem Grundträger 12 der Antriebseinheit 1 gegenüberliegenden Endes des Wellbalgs 4 mit dem verlagerbaren Bauteil 19 dessen Verstellung.

Die wellenförmige Ausgestaltung des Wellbalgs 4 bewirkt aufgrund der mit der Druckerhöhung einhergehenden axial auf die Wellen des Wellbalgs 4 wirkenden Kraftkomponente zudem eine selbsttätige Abdichtung zwischen dem Bauteil 19 und dem an dem Bauteil 19 anliegenden offenen Ende des Wellbalgs 4.

Zur Anordnung des Wellbalgs 4 und des Mikrogasgenerators 3 weist der Grundkörper 12 eine Aufnahmeöffnung 17 zur einsteckbaren Aufnahme eines Haltekörpers 13 auf, an dem neben dem Wellbalg 4 auch der Mikrogasgenerator 3 befestigt und zu einer Baueinheit zusammengefasst sind. Die aus dem Mikrogasgenerator 3 und dem Wellbalg 4 unter Verwendung des Haltekörpers 13 gebildete Baueinheit lässt sich in einfacher Weise in die zugeordnete Aufnahmeöffnung 17 einstecken, wobei ein einen größeren Durchmesser als die Befestigungsöffnung 17 aufweisender Flansch 23 eine axiale Lagesicherung des Haltekörpers 13 gegenüber dem Grundträger 12 bewirkt.

Der Grundträger 12 dient neben der Aufnahme des Wellbalgs 4 und dem zugeordneten Mikrogasgenerator 3 ferner dazu, die Antriebseinheit 1 relativ gegenüber dem Kraftfahrzeugsicherheitssystem festzulegen. Hierzu weist der Grundträger 12 eine Befestigungsöffnung 22 zur Aufnahme einer Befestigungsschraube 21 auf, mittels derer die Antriebseinheit 1 an vorgegebener Stelle am Kraftfahrzeugsicherheitssystem oder direkt am Fahrzeug festlegbar ist.

Zur Lagesicherung des verlagerbaren Bauteils 19 des Kraftfahrzeugsicherheitssystems an der Antriebseinheit 1 weist diese ferner ein Anschlusselement 10 mit einer Aufnahmeöffnung 11 auf, über welche das verlagerbare Bauteil 19 mit dem Anschlusselement 10 verschraubbar ist. Das Anschlusselement 10 ist dabei entsprechend der durch den Wellbalg 4 vorgegebenen Bewegungsrichtung bei dessen Aktivierung gegenüber dem Grundträger 12 verlagerbar angeordnet, um so zu gewährleisten, dass im Falle einer Aktivierung des Antriebseinheit 1 und einer daher damit einhergehenden Verlagerung des Wellbalgs 4 in die Aktivierungsposition eine zuverlässige Verlagerung des verlagerbaren Bauteils 19 erfolgt.

Um in der Normalposition des Wellbalgs 4 eine Lagesicherung des Anschlusselements 10 gegenüber dem Grundträger 12 der Antriebseinheit zu gewährleisten, ist diese ferner mit einem Sperrelement 14 versehen, welches das Anschlusselement 10 in seiner der Normalposition des Wellbalgs 4 zugeordneten Position an dem Grundträger 12 festlegt.

Das in Längsachsenrichtung des Grundträgers 12 zwischen einer Sperrlage und einer Freigabelage verschiebbare und in Verstellrichtung des Anschlusselements 10 an dem Grundträger 12 festgelegte Sperrelement 14 gewährleistet in der Sperrlage eine zuverlässige Festlegung des verlagerbaren Bauteils 19 an der Antriebseinheit 1. Eine Schraubendruckfeder 15 spannt dabei das Sperrelement 14 in Richtung auf die Sperrlage vor, um eine Lagesicherung zu gewährleisten und Klappergeräuschen vorzubeugen. In der der Normalposition des Wellbalgs 4 zugeordneten Sperrlage des Sperrelements 14 verhindert dabei ein Formschluss mit dem Anschlusselement 10 aufgrund der Festlegung des verlagerbaren Bauteils 19 an dem Anschlusselement 10 die Verlagerung des verlagerbaren Bauteils 19.

Um im Falle einer Aktivierung der Antriebseinheit 1 eine unmittelbare Freigabe des Anschlusselements 10 zu erreichen, ist es erforderlich, das Sperrelement 14 schlagartig in seine Freigabelage zu verlagern. Die Antriebseinheit 1 weist hierzu einen Gleitkeil 16 auf, welcher in der Normalposition des Wellbalgs 4 zwischen dem Flansch 23 und dem Grundträger 12 angeordnet ist und somit dem Haltekörper 13 gegenüber dem Grundträger 12 beabstandet. Aufgrund der in Verstellrichtung des Wellbalgs 4 betrachtet schräg verlaufenden Kontaktflächen des Flanschs 23 des Haltekörpers 12 mit dem Gleitkeil 16 bewirkt eine Aktivierung des Gasgenerators 3 eine Verschiebung des Gleitkeils 16, welche in Richtung auf die Freigabelage des Sperrelements 14 gerichtet ist. Aufgrund der Verbindung des Gleitkeils 16 mit dem Sperrelement 14 bewirkt eine Aktivierung des Mikrogasgenerators 3 somit über den Haltekörper 12 und den Gleitkeil 16 eine Verschiebung des Sperrelements 14 entgegen der durch die Schraubendruckfeder 15 aufgebrachten Vorspannkraft in die Freigabelage.

Um im Falle einer Aktivierung der Antriebseinheit 1 durch Zündung des pyrotechnischen Gasgenerators 3 die Verlagerungsbewegung des verlagerbaren Bauteils 19 gegenüber der Antriebseinheit 1 zu begrenzen, weist diese ferner ein Begrenzungselement 18 auf, welches mit dem Anschlusselement 10 verbunden ist. Das Begrenzungselement 18 ist als Bolzenkörper ausgebildet und erstreckt sich durch eine weitere Öffnung 20 des Grundträgers 12. An seinem dem Anschlusselement 10 gegenüberliegenden Ende weist das Begrenzungselement 18 eine schraubenkopfartige Aufweitung 25 auf, deren Durchmesser größer ist als der Durchmesser der Öffnung 20. Die maximale Verlagerbarkeit des verlagerbaren Bauteils 19 gegenüber dem Grundträger 12 wird somit bestimmt durch die Anlage der Aufweitung 25 des Begrenzungselements 18 an einer Unterseite des Grundträgers 12.

Um die Antriebseinheit 1 ferner zum Energieabbau im Falle einer vorgesehenen Rückverlagerung des Anschlusselements 1 aus seiner der Aktivierungsposition des Wellbalgs 4 zugeordneten Position in Richtung auf den Grundträger 12 zu nutzen, weist die Antriebseinheit 1 ferner eine Dämpfungseinheit 5 auf.

Die Dämpfungseinheit 5 ist zweigeteilt und wird aus einem ersten Dämpfungskörper 6, der aus zwei Dämpfungsblöcke 8 gebildet ist, die mit dem Anschlusselement 10 an dessen dem Grundträger 12 zugewandten Seite verbunden sind, sowie durch einen zweiten Dämpfungskörper 7, der zwei in Längsachsenrichtung des Grundträgers 12 verstellbare Dämpfungsblöcke 9 aufweist, gebildet.

Im Falle einer Aktivierung der Antriebseinheit 1 kommt es zu einer Verlagerung des ersten Dämpfungskörpers 6 gemeinsam mit dem Anschlusselement 10. Die Höhe der Dämpfungsblöcke 8 und Dämpfungsblöcke 9 ist dabei so bemessen, dass in der Aktivierungsposition des Anschlusselements 10 die in der Normalposition in Längsachsenrichtung des Grundträgers 12 betrachtet aneinander anliegenden Dämpfungskörper 6, 7 außer Eingriff gelangen. Aufgrund der durch Federpakete 24 bewirkte Vorspannung des Dämpfungskörpers 7 in Richtung auf den ersten Dämpfungskörper 6 erfolgt dann jedoch eine Verstellung des zweiten Dämpfungskörpers 7 in eine Position, in der dieser zwischen dem Grundträger 12 und dem ersten Dämpfungskörper 6 angeordnet ist. In dieser, in Fg. 2 dargestellten Position wirken der erste und der zweite Dämpfungskörper 6, 7 gemeinsam einer Rückverlagerung des Anschlusselements 10 in Richtung auf den Grundträger 12 entgegen, wodurch ein Energieabbau erreicht werden kann.

### Bezugszeichenliste

- 1: Antriebseinheit
- 2: Antriebselement
- 3: Gasgenerator
- 4: Expansionsbereich
- 5: Dämpfungseinheit
- 6: erster Dämpfungskörper
- 7: zweiter Dämpfungskörper
- 8: Dämpfungsblock
- 9: Dämpfungsblock
- 10: Anschlusselement
- 11: Aufnahmeöffnung
- 12: Grundträger
- 13: Haltekörper
- 14: Sperrelement
- 15: Schubendruckfeder
- 16: Gleitkeil
- 17: Öffnung (MGG)
- 18: Begrenzungselement
- 19: verlagerbares Bauteil
- 20: Öffnung (Begrenzungselement)
- 21: Befestigungsschraube
- 22: Befestigungsöffnung
- 23: Flansch
- 24: Federpaket
- 25: Kopf

## Patentansprüche

1. Antriebseinheit zur Verstellung eines verlagerbaren Bauteils eines Kraftfahrzeugsicherheitssystems, mit
- einem zwischen einer Normalposition und einer Aktivierungsposition verstellbaren und mit dem verlagerbaren Bauteil (19) in Eingriff bringbaren Antriebselement (2) und
- einem mit dem Antriebselement (2) in Wirkverbindung stehenden Gasgenerator (3) zur Verlagerung des Antriebselements (2) aus der Normalposition in die Aktivierungsposition, wobei das Antriebselement (2) einen balgförmigen Expansionsbereich (4) aufweist, der durch Aktivierung des Gasgenerators (3) aus einer in der Normalposition zusammengefalteten Lage in eine in der Aktivierungsposition entfaltete Lage verstellbar ist,
**dadurch gekennzeichnet, dass**
der balgförmige Expansionsbereich (4) an dem dem Bauteil (19) zugewandten Ende mit einem offenen Ende ausgebildet ist, das direkt am Bauteil (19) anliegt und während der Verlagerung eine selbsttätige Abdichtung zwischen dem Antriebselement (2) und dem Bauteil (199) bewirkt.

2. Antriebseinheit nach Anspruch 1, **dadurch gekennzeichnet, dass** der Gasgenerator (3) zumindest abschnittsweise im Inneren des Expansionsbereichs (4) angeordnet ist.

3. Antriebseinheit nach Anspruch 1 oder 2, **dadurch gekennzeichnet, dass** das Antriebselement durch den balgförmigen Expansionsbereich (4) gebildet ist.

4. Antriebseinheit nach einem der vorhergehenden Ansprüche, **dadurch gekennzeichnet, dass** der balgförmige Expansionsbereich durch einen in axialer Richtung längbaren Wellbalg (4) oder Membranbalg gebildet ist.

5. Antriebseinheit nach einem der vorhergehenden Ansprüche, **dadurch gekennzeichnet, dass** der balgförmige Expansionsbereich (4) aus einer Metallmembran gebildet ist.

6. Antriebseinheit nach einem der vorhergehenden Ansprüche, **gekennzeichnet durch** eine in der Aktivierungsposition einer Rückverlagerung in die Normalposition entgegenwirkende Dämpfungseinheit (5).

7. Antriebseinheit nach Anspruch 6, **dadurch gekennzeichnet, dass** die Dämpfungseinheit (5) zwei in der Normalposition des Antriebselements (2) in einer Außereingriffsposition befindliche Dämpfungskörper (6, 7) aufweist, die derart angeordnet sind, dass sie in der Aktivierungsposition des Antriebselements (2) in Wirkverbindung gelangen.

8. Antriebseinheit nach einem der vorhergehenden Ansprüche, **gekennzeichnet durch** ein mit dem verlagerbaren Bauteil (19) verbindbares Anschlusselement (10).

9. Antriebseinheit nach Anspruch 8, **dadurch gekennzeichnet, dass** das Anschlusselemcnt (10) in der Normalposition des Antriebselements (2) derart an einem Grundträger (12) lagegesichert ist, dass eine Aktivierung des Gasgenerators (3) eine Freigabe des Anschlusselements (10) gegenüber dem Grundträger (12) bewirkt.

10. Antriebseinheit nach Anspruch 9, **dadurch gekennzeichnet, dass** eine Aktivierung des Gasgenerators (3) eine Verschiebung eines das Anschlusselement (10) an dem Grundträger (12) festlegenden Sperrelementes (14) aus einer Sperrlage in eine das Anschlusselement (10) gegenüber dem Grundträger (12) freigebende Freigabelage bewirkt.

11. Antriebseinheit nach Anspruch 10, **dadurch gekennzeichnet, dass** das Sperrelement (14) in Richtung auf die Sperrlage vorgespannt ist.

12. Antriebseinheit nach einem der vorhergehenden Ansprüche 8 bis 10, **dadurch gekennzeichnet, dass** das Antriebselement (2) und der Gasgenerator (3) an einem in den Grundträger (12) einsteckbaren Haltekörper (13) angeordnet sind.

13. Antriebseinheit nach Anspruch 12, **dadurch gekennzeichnet, dass** der Haltekörper (13) in der Normalposition durch einen Gleitkeil (16) gegenüber dem Grundträger (12) beabstandet ist, wobei eine Aktivierung des Gasgenerators (3) eine Verschiebung des mit dem Sperrelement (14) verbundenen Gleitkeils (16) in die Freigabelage des Sperrelements (14) bewirkt.

14. Antriebseinheit nach einem der vorhergehenden Ansprüche 8 bis 13, **dadurch gekennzeichnet, dass** das Anschlusselement (10) mit einem gegenüber dem Grundträger (12) bis in eine Anschlagsposition verstellbaren Begrenzungselement (18) verbunden ist.

15. Antriebseinheit nach einem der vorhergehenden Ansprüche, **dadurch gekennzeichnet, dass** der Gasgenerator durch einen Mikrogasgenerator, insbesondere durch einen pyrotechnischen Mikrogasgenerator (3) gebildet ist.

## Claims

1. A drive unit for adjusting a displaceable component of a motor vehicle safety system with
- a drive element (2) adjustable between a normal position and an activation position and engageable with the displaceable component (19) and
- a gas generator (3) actively connected with the drive element (2) for displacing the drive element (2) from the normal position into the activation position, wherein the drive element (2) has a bellows-like expansion area (4), which is adjustable through activation of the gas generator (3) from a position folded together in the normal position to a position unfolded in the activation position,
**characterized in that**
the bellows-like expansion area (4) is designed with an open end on the end facing the component (19), which is directly adjacent to the component (19) and causes an automatic sealing between the drive element (2) and the component (19) during the displacement.

2. The drive unit according to claim 1, **characterized in that** the gas generator (3) is arranged at least partially inside the expansion area (4).

3. The drive unit according to claim 1 or 2, **characterized in that** the drive element is formed by the bellows-like expansion area (4).

4. The drive unit according to one of the preceding claims, **characterized in that** the bellows-like expansion area is formed by a corrugated bellows (4) elongatable in the axial direction or a diaphragm bellows.

5. The drive unit according to one of the preceding claims, **characterized in that** the bellowslike expansion area (4) is made of a metal membrane.

6. The drive unit according to one of the preceding claims, **characterized by** a damping unit (5) counteracting in the activation position a return displacement to the normal position.

7. The drive unit according to claim 6, **characterized in that** the damping unit (5) has two damping bodies (6, 7) located in the normal position of the drive element (2) in a disengaged position, which are arranged such that they become actively connected in the activation position of the drive element (2).

8. The drive unit according to one of the preceding claims, **characterized by** a connection element (10) connectable with the displaceable component (19).

9. The drive unit according to claim 8, **characterized in that** the connection element (10) in the normal position of the drive element (2) is secured on a base support (12) such that an activation of the gas generator (3) causes a release of the connection element (10) with respect to the base support (12).

10. The drive unit according to claim 9, **characterized in that** an activation of the gas generator (3) causes a shifting of a blocking element (14) fixing the connection element (10) on the base support (12) from a blocking position into a releasing position releasing the connection element (10) with respect to the base support (12).

11. The drive unit according to claim 10, **characterized in that** the blocking element (14) is pretensioned in the direction of the blocking position.

12. The drive unit according to one of the preceding claims 8 to 10, **characterized in that** the drive element (2) and the gas generator (3) are arranged on a holding body (13) that is insertable into the base support (12).

13. The drive unit according to claim 12, **characterized in that** the holding body (13) in the normal position is distanced with respect to the base support (12) by a sliding wedge (16), wherein an activation of the gas generator (3) causes a shifting of the sliding wedge (16) connected with the blocking element (14) into the releasing position of the blocking element (14).

14. The drive unit according to one of the preceding claims 8 to 13, **characterized in that** the connection element (10) is connected with a limiting element (18) adjustable up to an end position with respect to the base support (12).

15. The drive unit according to one of the preceding claims, **characterized in that** the gas generator is formed by a micro gas generator, in particular by a pyrotechnical micro gas generator (3).

## Revendications

1. Unité d'entraînement pour le réglage d'un composant déplaçable d'un système de sécurité de véhicule automobile, avec
- un élément d'entraînement (2) réglable entre une position normale et une position d'activation et pouvant être amené en prise avec le composant (19) déplaçable, et
- un générateur de gaz (3) en liaison opératoire avec l'élément d'entraînement (2) pour le déplacement de l'élément d'entraînement (2) à partir de la position normale vers la position d'activation, l'élément d'entraînement (2) présentant une zone d'expansion (4) en forme de soufflet qui peut, par l'activation du générateur de gaz (3), être déplacée à partir d'une position repliée dans la position normale vers une position déployée dans la position d'activation,
**caractérisée en ce que**
la zone d'expansion (4) en forme de soufflet est, à l'extrémité tournée vers le composant (19), constituée avec une extrémité ouverte qui est directement adjacente au composant (19) et qui, pendant le déplacement, réalise une étanchéité automatique entre l'élément d'entraînement (2) et le composant (19).

2. Unité d'entraînement selon la revendication 1, **caractérisée en ce que** le générateur de gaz (3) est disposé, au moins par tronçons, à l'intérieur de la zone d'expansion (4).

3. Unité d'entraînement selon la revendication 1 ou 2, **caractérisée en ce que** l'élément d'entraînement est formé par la zone d'expansion (4) en forme de soufflet.

4. Unité d'entraînement selon une des revendications précédentes, **caractérisée en ce que** la zone d'expansion en forme de soufflet est formée par un soufflet ondulé (4) ou soufflet à membrane pouvant s'allonger dans une direction axiale.

5. Unité d'entraînement selon une des revendications précédentes, **caractérisée en ce que** la zone d'expansion (4) en forme de soufflet est formée d'une membrane métallique.

6. Unité d'entraînement selon une des revendications précédentes, **caractérisée par** une unité d'amortissement (5) s'opposant, dans la position d'activation, à un mouvement de retour vers la position normale.

7. Unité d'entraînement selon la revendication 6, **caractérisée en ce que** l'unité d'amortissement (5) présente deux corps amortisseurs (6, 7) situés, dans la position normale de l'élément d'entraînement (2), dans une position hors mise en prise et qui sont disposés de telle sorte que, dans la position d'activation de l'élément d'entraînement (2), ils entrent en liaison opératoire.

8. Unité d'entraînement selon une des revendications précédentes, **caractérisée par** un élément de raccordement (10) pouvant être raccordé au composant (19) déplaçable.

9. Unité d'entraînement selon la revendication 8, **caractérisée en ce que** l'élément de raccordement (10), dans la position normale de l'élément d'entraînement (2), est bloqué en position sur un support de base (12) de telle sorte qu'une activation du générateur de gaz (3) provoque une libération de l'élément de raccordement (10) par rapport au support de base (12).

10. Unité d'entraînement selon la revendication 9, **caractérisée en ce qu'**une activation du générateur de gaz (3) provoque un coulissement d'un élément de blocage (14) immobilisant l'élément de raccordement (10) sur le support de base (12) à partir d'une position de blocage vers une position de libération libérant l'élément de raccordement (10) par rapport au support de base (12).

11. Unité d'entraînement selon la revendication 10, **caractérisée en ce que** l'élément de blocage (14) est précontraint en direction de la position de blocage.

12. Unité d'entraînement selon une des revendications précédentes 8 à 10, **caractérisée en ce que** l'élément d'entraînement (2) et le générateur de gaz (3) sont disposés sur un corps de retenue (13) pouvant être enfiché dans le support de base (12).

13. Unité d'entraînement selon la revendication 12, **caractérisée en ce que** le corps de retenue (13) est, dans la position normale, tenu à distance du support de base (12) par une clavette glissante (16), une activation du générateur de gaz (3) provoquant un coulissement de la clavette glissante (16), raccordée à élément de blocage (14), vers la position de libération de l'élément de blocage (14).

14. Unité d'entraînement selon une des revendications précédentes 8 à 13, **caractérisée en ce que** l'élément de raccordement (10) est raccordé à un élément de limitation (18) réglable par rapport au support de base (12) jusque dans une position de butée.

15. Unité d'entraînement selon une des revendications précédentes, **caractérisée en ce que** le générateur de gaz est formé par un microgénérateur de gaz, en particulier par un microgénérateur de gaz pyrotechnique (3).
